# EUROPEAN PATENT APPLICATION

(11) **EP 2 163 317 A1**
(43) Date of publication of application: **17.03.2010**
(21) Application number: 08764643.6
(22) Date of filing: 19.05.2008
(51) Int. Cl.: B09B 3/00, A23K 1/00, C05F 17/02

(54) **APPARATUS FOR PRODUCING FEEDS COMPRISING DRIED AND FERMENTED ANIMAL AND PLANT RESIDUES AND DRIED AND FERMENTED FERTILIZERS**

(30) Priority: 23.05.2007 JP 2007163142
(71) Applicant: Hokkaido Tokushushiryou Kabushikikaisha, Hokkaido 060-0013 (JP)
(72) Inventor: ONOSE, Kazuhiro, Kamaikawa-gun Hakkaido 089-0101 (JP)
(74) Representative: Vièl, Frédérique
(86) International application number: PCT/JP2008/059598
(87) International publication number: WO 2008/146761

(57) **Abstract**

In organic waste treatment, initial investment and running costs are suppressed, and inexpensive and good-quality dried and fermented feeds and fertilizers are manufactured from animal and plant residues. The animal and plant residues having been reserved / accumulated in a fermentation tank and generated fermentation heat is emitted / sprayed with air into a space in the fermentation tank and repeatedly circulated within the apparatus so that an evapotranspiration action is efficiently performed, oxygen required for fermentation is uniformly supplied so as to keep a favorable fermentation environment, and an apparatus for producing good-quality dried and fermented feeds and fertilizers is provided.

## Description

### Technical Field

The present invention relates to an apparatus for producing feeds comprising dried and fermented animal and plant residues and dried and fermented fertilizers having a function of making organic wastes into feeds, fertilizers and the like.

### Background Art

A lot of proposals have been made on treatment systems of organic wastes, but initial investments and running costs are expensive, the organic wastes are hardly reused, and the proposals cannot be considered to be well functioning.

A lot of proposals have been also made on methods and devices for fermentation / drying, and they can be roughly divided into three groups.

A first group is a method of natural fermentation using flat arranging, turning over and the like, the second group is a heating / agitation type device, and the third group is a method for fermentation and drying using a decompressed drying device.

### Summary of Invention

### Technical Problem

Prior-art methods using natural fermentation requires a long time till feeds /fertilizers are completed and also requires a large workshop, oxygen supply / temperature control by repeated turning over, and this is not efficient in terms of time and a working cost.

With the heating / agitating type devices, heating costs are high, chances / areas where treatment objects are in contact with air are small in agitation, which is not suitable for evapotranspiration, and energy efficiency is poor.

With the decompressed drying type devices, too, the heating costs are high, initial investment is large, and a temperature control inside a plant to a state suitable for fermentation is difficult.

### Solution to Problem

In order to solve the above problems, the present invention is **characterized in that** an evapotranspiration action is efficiently conducted by mixing an auxiliary material for adjusting a fermentation environment in an animal and plant residues having been finely cut out / crushed or adding a known fermenter to the animal and plant residues not requiring the auxiliary material such as sake lees, beer lees, tofu lees and the like and then, inputting the residues into a fermentation tank of the apparatus for producing feeds comprising dried and fermented animal and plant residues and dried and fermented fertilizers, reserving and accumulating it and then, transferring it to a circulation duct in a small and constant amount while agitating it by a screw conveyer from the lowermost part, blowing it up in the circulation duct with hot air at a temperature of approximately 40 to 50 degrees using air from a blower or the like or waste heat of a boiler or the like and emitting / spraying it into the air in a space in the fermentation tank through a circulation input located at an upper part so as to increase an area in contact with the air and to increase chances in contact with the air through repeated circulation in the apparatus.

By repeating emission / spraying into the air of the animal and plant residues through blowing up with air or hot air using a blower or the like, oxygen required for fermentation is uniformly supplied, characteristics for keeping the fermentation environment are favorable, and good-quality dried and fermented feeds / dried and fermented fertilizers and the like can be manufactured.

### Advantageous Effects of Invention

Since the apparatus for producing feeds comprising dried and fermented animal and plant residues and dried and fermented fertilizers has a simple structure not requiring a large installation area and can suppress initial investment and running costs, too, by efficiently performing an evapotranspiration action as compared with heated drying and decompressed drying and has characteristics to maintain the fermentation environment favorable by uniform supply of oxygen, uniform fermentation can be realized, and since drying at 60°C or less is possible, extinction rate of fermenters is lower than that of the heated drying or decompressed drying dried at a high temperature, and the good-quality dried and fermented feeds / dried and fermented fertilizers and the like with stable nutrition value / high digestibility can be manufactured. Also, an inexpensive transport cost can be realized by drying to a moisture content of 10% as compared with fermented feeds and fertilizers usually containing a moisture content of approximately 50%, contribution can be made to prevention of quality alteration and to improvement of a distribution cost, which have been great obstacles to reuse of organic wastes, and since direct warming / heating by fossil fuels or the like is not used but only steam is emitted other than the product, and no discharged water / waste liquid is produced at all, contribution can be made to environmental preservation of the earth.

### Brief Description of Drawings

This is a sectional view illustrating an apparatus for producing feeds comprising dried and fermented animal and plant residues and dried and fermented fertilizers of the present invention.

### Explanation of Reference Numerals

- 1: fermentation tank
- 1a: inlet of animal and plant residues
- 1b: inlet for circulation
- 2: screw conveyer
- 3: circulation duct
- 4: blower
- 5: discharge duct
- 6: product reception tank
- 6a: discharge outlet
- 6b: product outlet

### Description of Embodiments

The object of efficient / economical drying using fermentation heat of organic wastes is realized by a simple combination of a fermentation tank, a screw conveyer, a blower, a duct, and a product reception tank.

### Example 1

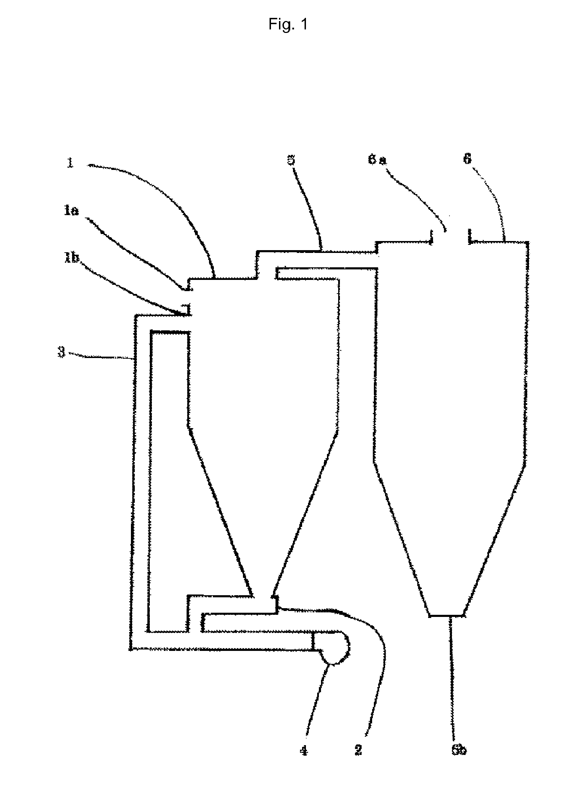

A preferred embodiment of the present invention will be described referring to the attached drawing. As shown in Fig. 1, an apparatus for producing feeds comprising dried and fermented animal and plant residues and dried and fermented fertilizers is constituted by a fermentation tank 1, a screw conveyer 2, a circulation duct 3, a blower 4, a discharge duct 5, and a product reception tank 6. The fermentation tank 1 has an inlet 1a of animal and plant residues at an upper part, connected to the circulation duct 3 continuing to the screw conveyer 2 at a circulation inlet 1 b, connected to the screw conveyer 2 continuing to the circulation duct 3 at a lower part, and connected to the discharge duct 5 continuing to the product reception tank 6 at a top part. The above shapes, materials, scales, arrangements and the like are matters on design, and other shapes, scales, and arrangements may be used as long as they are within a range of the present invention and do not depart therefrom, and a blower can create air for blowing up such as a blower, a fan, a forage blower, a snow blower and the like, and any duct can be also used for the circulation duct as long as it forms a circulation passage such as a pipe, a hose, a chimney and the like.

An auxiliary material is mixed in the animal and plant residues having been finely cut out, a fermenter is added, and then, the residues are inputted into the fermentation tank 1 through the inlet 1a of animal and plant residues, reserved and accumulated and then, transferred to the circulation duct 3 by the screw conveyer 2 at the lower part, the inside of the circulation duct 3 is blown up together with air by the blower 4, emitted and sprayed into the air in a space in the fermentation tank 1 through the circulation inlet 1 b, reserved and accumulated again, and repeatedly circulated within the apparatus.

The dried and fermented animal and plant residues and dried and fermented fertilizers having been fermented, dried and become a product during circulation are transferred and separately contained in the product reception tank 6 with discharged air from the discharge duct 5, while the discharged air is discharged from a discharge outlet 6a at the top part.

### Industrial Applicability

The present invention has characteristics that chances and areas in contact with air are increased, an evapotranspiration action is performed efficiently, and no external heat source is required by using fermentation heat of the animal and plant residues and emitting / spraying the animal and plant residues generating heat into the air in a space in the fermentation tank.

Byproducts of food processing contain much moisture and are difficult to be reserved, and they need to be dried for distribution. However, a prior-art drying method using fossil fuels is not economical and the present invention can be used as an alternative inexpensive method.

## Claims

1. An apparatus for producing feeds/fertilizers comprising dried and fermented animal and plant residues provided with
a product reception tank having
a discharge outlet at a top part continuing from a circulation duct, a blower and a discharge duct; and
a product outlet at the lowermost part and being joined to
a fermentation tank having
an inlet for animal and plant residues and a circulation inlet in an upper part; and
a circulation outlet and a screw conveyer continuing thereto at a lower part,
**characterized in that**
fermentation heat is generated by reserving / accumulating animal and plant residues in the fermentation tank, a predetermined amount of which is transferred to the circulation duct while being agitated by the screw conveyer from the lower part of the fermentation tank,
the animal and plant residues are blown up with air or hot air within the circulation duct by the blower or the like so as to be emitted / sprayed into the air in a space in the fermentation tank through the circulation inlet at the upper part of the fermentation tank, and be repeatedly circulated within the apparatus to increase the area and chance of contact with the air and ensure efficient evapotranspiration.
